# EUROPEAN PATENT SPECIFICATION

(11) **EP 4 270 778 B1**
(45) Date of publication and mention of the grant of the patent: **20.08.2025**
(21) Application number: 23155524.4
(22) Date of filing: 08.02.2023
(51) Int. Cl.: H02S 20/26, H02S 40/38

(54) **BUILDING WALL**
GEBÄUDEWAND
MUR DE BÂTIMENT

(30) Priority: 28.04.2022 CN 202221038086 U
(43) Date of publication of application: 01.11.2023
(73) Proprietor: Beijing Colorstone New Energy Co.,Ltd., Beijing 102209 (CN)
(72) Inventor: JIANG, Yang, BEIJING, 100024 (CN); SHEN, Yilei, SHANGHAI, 200136 (CN); JIANG, Xulai, BEIJING, 100024 (CN)
(74) Representative: Plasseraud IP

(56) References cited:
- DE-A1- 102019 117 665
- KR-B1- 101 710 473
- US-A1- 2014 311 061
- US-A1- 2015 280 640

## Description

### TECHNICAL FIELD

The application relates to the field of building, and in particular to a building wall.

### BACKGROUND

At present, the existing building walls are mostly made of steel bars, cement, concrete and bricks. They mainly play the role of load-bearing, enclosure and division. Their functions are relatively single and cannot meet the requirements of new energy and building integration applications in the future. At present, "BIPV" (Building Integrated Photovoltaic) is a technical direction that integrates solar power generation (photovoltaic) function into buildings, but it cannot realize the integration of construction wall, photovoltaic power generation and energy storage. The energy storage can solve the problem of unstable power generation of new energy such as solar and wind energy, and plays an irreplaceable role in the peak load regulation of power grid. Therefore, the energy storage has increasingly become the key to the promotion and application of new energy.

US2014/311061A1 discloses a solar power unit comprising a frame, configured to be integrated into a building structure, for supporting a solar panel for generating a power signal, and a front cover for securing the solar panel to the frame.

DE102019117665A1 discloses a modular wall system comprising solid components for the modular construction of self-supporting wall segments, wherein the solid components have one or more through-holes for holding photovoltaic modules.

### SUMMARY

The object of an embodiment of the application is to provide a building wall to solve the problem that the existing building walls play a relatively single function. In the embodiment, an energy storage device is also integrated into the building wall, or an energy storage/wall integrated component is formed directly, so that the building wall integrates functions of enclosure, photovoltaic power generation, energy storage, networking deployment and power supply in the same building group, and is integrated with a traditional building wall structure, which takes a another big step on the basis of BIPV. In this way, a building also has functions of energy storage, peak load regulation of power grid and self-restoring power supply in the same urban area in case of emergency, which is conducive to solving the bottleneck of new energy application, further accelerating the promotion and reducing carbon emissions.

The invention is set out in the appended set of claims.

The building wall according to the embodiment of the application is integrated with the wall body, the rechargeable battery component and the photovoltaic outer wall panel to realize an integrated design and manufacture of the above multiple functions. Among them, the rechargeable battery component is a part of the wall structure. Specifically, for example, the cement-based rechargeable battery component is integrated with the wall. The cement-based rechargeable battery component can play a certain load-bearing role. Other components in the wall body work together with the cement-based rechargeable battery component to meet the strength requirement of the structure of the wall body. The photovoltaic outer wall panel is installed on the outer wall surface of the wall body. The outer wall surface of the wall body can receive sunlight. Therefore, the photovoltaic outer wall panel installed on the outer wall surface can receive sunlight and convert solar energy into electrical energy. The photovoltaic outer wall panel is electrically connected with the rechargeable battery component provided in the wall body by the pre-embedded part, so that the photovoltaic outer wall panel can transmit the electrical energy to the rechargeable battery component through the pre-embedded part. The rechargeable battery component can store electrical energy. The rechargeable battery component can be further connected with the electrical equipment to provide electrical energy for them to perform normally. Alternatively, the rechargeable battery component is connected with rechargeable battery components in other building. In some cases (such as power shortage in a certain building or a urban area), power supply is deployed by network. The building wall of the embodiment is integrated with a photovoltaic power generation device, a storage/discharge device and the structure of the wall body, and has the functions of photovoltaic power generation, energy storage and power supply, and network peak load regulation. It can make full use of solar energy, save energy consumption, and realize "low-carbon emission".

### BRIEF DESCRIPTION OF THE DRAWINGS

In order to more clearly illustrate the embodiments of the application and the technical solutions of the prior art, the accompanying drawings that need to be used in the embodiments and the prior art will be briefly descripted below. Obviously, the accompanying drawings descripted below are for only some of embodiments of the application. Those skilled in the art can also obtain other embodiments according to these drawings.
FIG. 1 is a schematic diagram of the overall structure of a building wall of an embodiment of the application;
FIG. 2 is a front view of the building wall shown in FIG. 1;
FIG. 3 is a cross-sectional view of the building wall shown in FIG. 2 taken along line A-A;
FIG. 4 is a schematic structural diagram of the building wall in which a rechargeable battery component is a lithium battery component according to the embodiment of the application.

### DETAILED DESCRIPTION

The technical solutions in an embodiment of the application will be clearly and completely described below with reference to the accompanying drawings in the embodiment of the application. Obviously, the described embodiments are only some, and not all, of the embodiments of the application. All other embodiments obtained based on the embodiments in the present application by those skilled in the art fall within the scope of protection of the present application.

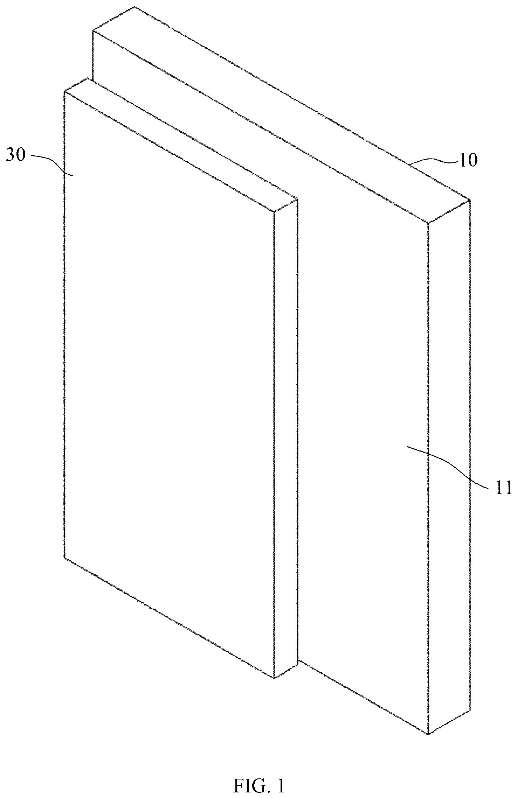

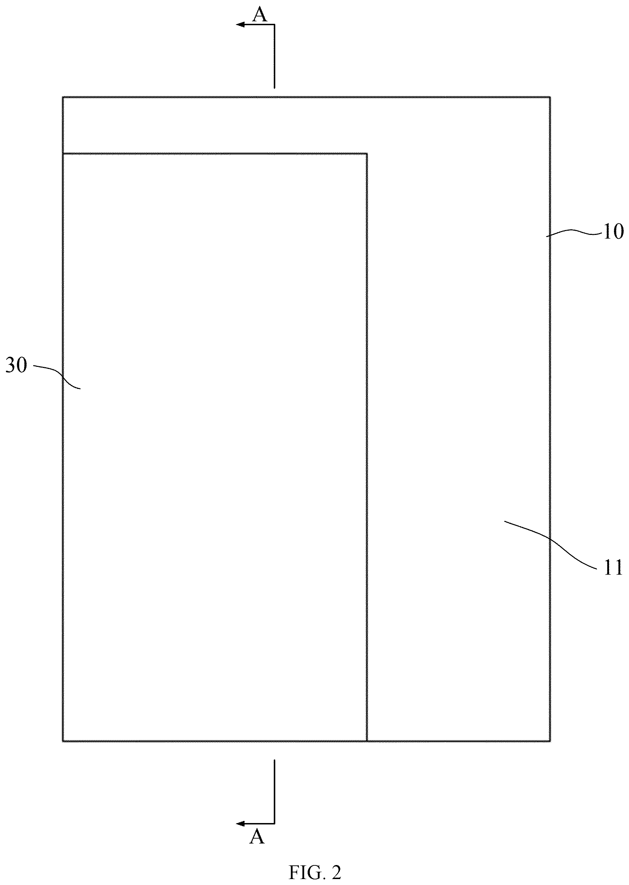

As shown in FIG. 1, FIG. 2 and FIG. 3, an embodiment of the application proposes a building wall. The building wall includes a wall body 10, a rechargeable battery component 20, a photovoltaic outer wall panel 30 and a pre-embedded part 40. The rechargeable battery component 20 is provided in the wall body 10. The rechargeable battery component 20 forms a combined structure with the wall body 10. The rechargeable battery component 20 is configured to supply power to electrical equipment. The wall body 10 includes an outer wall surface 11. The photovoltaic outer wall panel 30 is provided on the outer wall surface 11, and the pre-embedded part 40 is provided in the wall body 10. The photovoltaic outer wall panel 30 is electrically connected with the rechargeable battery component 20 by the pre-embedded part 40.

The building wall according to the embodiment of the application integrates the wall body 10, the rechargeable battery component 20 and the photovoltaic outer wall panel 30, wherein the rechargeable battery component 20 is a part of the structure of the wall body 10. Specifically, for example, the cement-based rechargeable battery component 20 is integrated in the wall body 10. The cement-based rechargeable battery component 20 can play a certain load-bearing role, and other components in the wall body 10 work together with the cement-based rechargeable battery component 20 to meet the strength requirement of the structure of the wall body 10. The photovoltaic outer wall panel 30 is provided on the outer wall surface 11 of the wall body10. The outer wall surface 11 of the wall body 10 can receive sunlight illumination. Therefore, the photovoltaic outer wall panel 30 provided on the outer wall surface 11 can receive sunlight illumination and convert solar energy into electrical energy. The photovoltaic outer wall panel 30 is electrically connected with the rechargeable battery component 20 provided in the wall body 10 by the pre-embedded part 40. In this way, the photovoltaic outer wall panel 30 can transmit electrical energy to the rechargeable battery component 20 through the pre-embedded part 40, and the rechargeable battery component 20 can store electric energy. The rechargeable battery component 20 can be further connected with the electrical equipment to provide electrical energy to the electrical equipment, such that the electrical equipment can operate normally. Alternatively, the rechargeable battery component 20 is connected with rechargeable battery components in another building so as to supply power by networking deployment. The building wall of the embodiment of the application integrates a photovoltaic power generation device and a storage/discharge device, and is integrated with the structure of the wall body. In terms of functions, in addition to traditional functions of enclosure and load-bearing, the building wall of the embodiment of the application has beneficial effects of energy storage, photovoltaic power generation and power supply, which can make full use of solar energy, save energy consumption and realize low-carbon emission.

The photovoltaic outer wall panel 30 is a plate-shaped photovoltaic module with decoration, packaging and other functions. Specifically, the photovoltaic module can be a thin-film photovoltaic module. The photovoltaic module can convert solar energy into electrical energy. The thin-film photovoltaic module have the advantages of using less materials, simple manufacturing process, low energy consumption, large-area continuous production, and good low-light behavior. A photovoltaic system in which a thin-film photovoltaic outer wall panel 30 is a main component of the photovoltaic outer wall panel can well realize the integration of photovoltaic and building. There are many kinds of thin-film photovoltaic modules, such as CIGS (copper indium gallium selenide), cadmium telluride, organic photovoltaic, dye-sensitized solar cells, HJT (heterojunction), perovskite and so on.

The photovoltaic module can also be a crystalline silicon photovoltaic module. The crystalline silicon module has advantages of high power conversion efficiency rate, technological maturity, and low production cost. There are many kinds of crystalline silicon photovoltaic modules, including polycrystalline, single-crystalline, black silicon, high-efficiency single-crystalline, a passivated emitter and rear contact cell, a passivated emitter and rear locally-diffused cell, a tunnel oxide passivated contact cell, an interdigitated back contact cell, a conventional aluminum back surface field cell and so on.

In some embodiments of the application, the outer surface of the photovoltaic outer wall panel 30 is provided with a pattern. The photovoltaic outer wall panel 30 is usually provided on the facade of the building wall to better receive light. In addition to traditional black, the outer surface of the photovoltaic outer wall panel 30 can also have various texture patterns and colors. Thus, the photovoltaic outer wall panel 30 with various colors and texture patterns can be used as a facade decoration part of the building wall. Therefore, the photovoltaic outer wall panel 30 can have the functions of power generation and decoration at the same time, which can save the cost of facade decoration materials of the building and help the application and popularization of clean energy in the facade of the building, thus reducing carbon emission of the building.

In some embodiments of the application, the wall body 10 is a precast cement wall body. The pre-embedded part 40 is provided in the precast cement wall body. Cement, which is a common building material of the building wall, has high strength after curing, which effectively ensure the firmness of the building wall. The precast cement wall body in the embodiment of the application is generally precast by formwork, and its shape, thickness and size are usually uniform, which is adapted to an assembled building wall and can help to improve construction speed. The precast cement wall body can also be set into various shapes, thicknesses and sizes according to actual needs, so as to better meet the requirements of various building walls. A pre-embedded part 40 is provided in the precast cement wall body. The pre-embedded part 40 is usually a high-strength metal product such as steel keels, which can provide strength support for the precast cement wall body, prevent the precast cement wall body from breaking, and keep the integrity of the precast cement wall body.

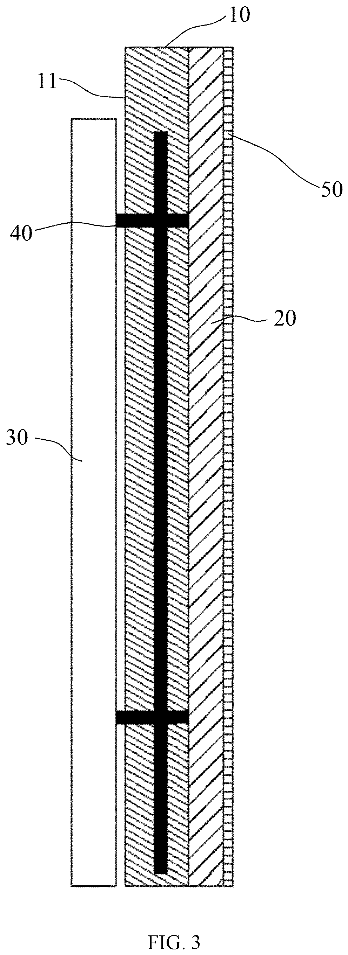

In some embodiments of the application, as shown in FIG. 3, the rechargeable battery component 20 is a rechargeable energy storage cement battery component. One end of the pre-embedded part 40 is connected to the photovoltaic outer wall panel 30, and the other end of the pre-embedded part 40 is connected with the rechargeable energy storage cement battery component. The material cost of cement battery components of rechargeable energy storage is low, which can be applied to a large-scale energy storage system. Compared with commercial lithium batteries, electrode materials used by the rechargeable energy storage cement battery component have higher safety performance and long shelf life, and resistance to overcharge and discharge, and short circuit. One end of the pre-embedded part 40 is connected to the rechargeable energy storage cement battery component, and the other end of the pre-embedded part 40 is connected with the photovoltaic outer wall panel 30. The pre-embedded part 40 can conduct electrical energy. The photovoltaic outer wall panel 30 can transmit electrical energy to the rechargeable battery component 20 through the pre-embedded part 40, thus saving electrical energy conducting modules and reducing costs.

In some embodiments of the application, the rechargeable energy storage cement battery component includes an anode cement layer, a cathode cement layer and a diaphragm layer. The diaphragm layer is provided between the anode cement layer and the cathode cement layer. The anode cement layer and cathode cement layer are both made of conductive cement. The anode cement layer and cathode cement layer are necessary components for maintaining the normal operation of a battery system, and the diaphragm layer can prevent short circuits within the battery system. In the embodiment of the application, the anode cement layer includes an anode conductive grid structure and anode conductive cement provided on both sides of the anode conductive grid structure. The cathode cement layer includes a cathode conductive grid structure and cathode conductive cement provided on both sides of the cathode conductive grid structure. The diaphragm layer includes anion exchange resin and cured cement mortar or the like, so that cement concrete can be converted into low-carbon or negative-carbon products. Meanwhile, the main material of the cement battery component of rechargeable energy storage is cement, so that the rechargeable energy storage cement battery component can be better integrated with the composite building wall. As a part of the structure of the building wall, the rechargeable energy storage cement battery component plays a certain load-bearing or semi-load-bearing function. The rechargeable energy storage cement battery component works together with other components, so that the structural strength of the building wall can meet requirements.

In some embodiments of the application, the wall body 10 is a sintered hollow composite panel. The sintered hollow composite panel is the main material of the wall body commonly used in the construction industry, which has characteristics of light weight, high strength, heat preservation, good sound insulation and noise reduction, environmental protection and pollution-free and so on. The application of the sintered hollow composite panel can reduce the weight of building walls, and help to improve the work efficiency and reduce the cost of manpower and material resources in the construction process.

In some embodiments of the present application, the rechargeable battery component 20 is a plate-type rechargeable energy storage cement battery component. The plate-type rechargeable energy storage cement battery component can be thinner and lighter, which can save the space occupied by the plate-type rechargeable energy storage cement battery component in the wall body 10, especially when the wall body 10 is small in thickness or the wall body 10 is assembled by the sintered hollow composite panels, which is beneficial to ensure the structural strength of the wall body 10.

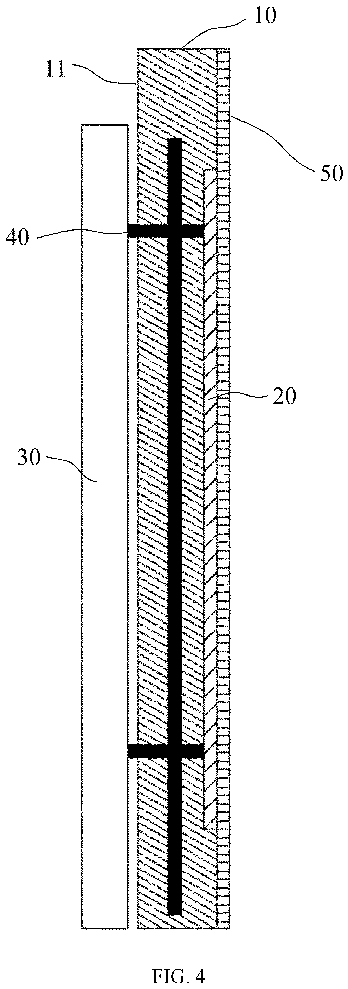

In some embodiments of the application, as shown in FIG. 4, the rechargeable battery component is a lithium battery component. The lithium battery is a kind of battery which uses lithium metal or lithium alloy as positive/negative materials and uses solid state electrolyte. The lithium battery has high energy, long shelf life, light weight, strong adaptability to high and low temperatures and environmental protection. The lithium battery is widely used in digital products such as mobile phones, notebook computers and other products, as well as in the field of new energy vehicles. In the embodiment of the application, a lithium battery component formed by combining a lithium battery with building materials is provided inside the wall body 10. The photovoltaic outer wall panel 30 is electrically connected with the positive and negative electrodes of the lithium battery component by the pre-embedded part 40, so as to realize electrical energy transmission. The power generated by the photovoltaic outer wall panel 30 or the power at the time of low grid usage is stored in the wall body 10, and released for use during peak power consumption, so as to balance the power of the grid.

In addition, the rechargeable battery component can also be other commercial rechargeable battery components, such as a nickel-hydrogen battery component, a nickel-chromium battery component, a nickel-iron battery component, a nickel-lithium battery component, a nickel-zinc battery component, a lead-acid battery component or a sodium ion battery components and so on, so as to enhance universality of the building wall application.

In some embodiments of the application, the wall body 10 includes a main part and a heat-preserving and sound-insulating sheet provided on the main part. By providing the heat-preserving and sound-insulating sheet on the wall body 10, the sound-insulating and heat-preserving effect of the building can be improved, and the living comfort of the building can be improved. There are many kinds of materials for the heat-preserving and sound-insulating sheet, such as polyester fiber, sound-insulating felt, sound-absorbing cotton and so on.

In some embodiments of the application, as shown in Figs. 3 and 4, the building wall usually further includes an inner wall panel 50. There are many kinds of inner wall panels, such as plywood, molded plate, marble plate and so on, which can decorate the wall inside the building. At the same time, the inner wall panel 50 can prevent the rechargeable battery component 20 from being exposed, which is beneficial to maintaining the performance of safety and power storage of the rechargeable battery component 20.

It should be noted that, in the application, relational terms such as first and second and the like are only used to distinguish one entity or operation from another and do not necessarily require or imply any such actual relationship or order between these entities or operations. Moreover, the terms "comprising", "including" or any other variations thereof are intended to encompass a non-exclusive inclusion such that a process, method, article or device that includes a series of elements includes not only those elements, but also includes other elements not explicitly listed or other elements inherent to such a process, method, article or apparatus. Without further limitation, elements defined by the phrase "comprising a/an..." do not preclude the presence of additional identical elements in a process, method, article or device that includes the mentioned elements.

The various embodiments in this application are described in a related manner. Each embodiment focuses on the differences from other embodiments, and the same and similar parts between the various embodiments can be referred to each other.

The above descriptions are only preferred embodiments of the present application, and are not intended to limit the present application. Any modifications, equivalent replacements, improvements and the like made within the spirit and principles of the present application shall be included within the scope of protection of the present application.

## Claims

1. A building wall, comprising:
a wall body (10);
a rechargeable battery component (20) provided in the wall body (10), wherein the rechargeable battery component (20) forms a combined structure with the wall body (10), and is configured to supply power to electrical equipment;
a photovoltaic outer wall panel (30), wherein the wall body (10) comprises an outer wall surface (11) on which the photovoltaic outer wall panel (30) is provided;
**characterized in that** a pre-embedded part (40) is provided in the wall body (10), wherein the photovoltaic outer wall panel (30) is electrically connected with the rechargeable battery component (20) by the pre-embedded part (40);
wherein the rechargeable battery component (20) is a rechargeable energy storage cement battery component, one end of the pre-embedded part (40) is connected to the photovoltaic outer wall panel (30), and the other end of the pre-embedded part (40) is connected with the rechargeable energy storage cement battery component.

2. The building wall according to claim 1, wherein an outer surface of the photovoltaic outer wall panel (30) is provided with a pattern.

3. The building wall according to claim 1, wherein the wall body (10) is a precast cement wall body in which the pre-embedded part (40) is provided.

4. The building wall according to claim 1, wherein the rechargeable energy storage cement battery component comprises an anode cement layer, a cathode cement layer and a diaphragm layer that is provided between the anode cement layer and the cathode cement layer.

5. The building wall according to claim 1, wherein the wall body (10) is a sintered hollow composite panel.

6. The building wall according to claim 5, wherein the rechargeable battery component (20) is a plate-type rechargeable energy storage cement battery component.

7. The building wall according to claim 1, wherein the wall body (10) comprises a main part and a heat-preserving and sound-insulating sheet provided on the main part.

## Patentansprüche

1. Gebäudewand, umfassend:
einen Wandkörper (10);
eine wiederaufladbare Batteriekomponente (20), welche in dem Wandkörper (10) bereitgestellt ist, wobei die wiederaufladbare Batteriekomponente (20) eine kombinierte Struktur mit dem Wandkörper (10) bildet und dazu eingerichtet ist, elektrische Geräte mit Strom zu versorgen;
ein Photovoltaik-Außenwandpaneel (30), wobei der Wandkörper (10) eine Außenwandfläche (11) umfasst, an welcher das Photovoltaik-Außenwandpaneel (30) bereitgestellt ist;
**dadurch gekennzeichnet, dass** ein vorab eingebetteter Teil (40) in dem Wandkörper (10) bereitgestellt ist, wobei das Photovoltaik-Außenwandpaneel (30) durch den vorab eingebetteten Teil (40) elektrisch mit der wiederaufladbaren Batteriekomponente (20) verbunden ist;
wobei die wiederaufladbare Batteriekomponente (20) eine wiederaufladbare Energiespeicherzementbatteriekomponente ist, ein Ende des vorab eingebetteten Teils (40) mit dem Photovoltaik-Außenwandpaneel (30) verbunden ist und das andere Ende des vorab eingebetteten Teils (40) mit der wiederaufladbaren Energiespeicherzementbatteriekomponente verbunden ist.

2. Gebäudewand nach Anspruch 1, wobei eine äußere Fläche des Photovoltaik-Außenwandpaneels (30) mit einem Muster bereitgestellt ist.

3. Gebäudewand nach Anspruch 1, wobei der Wandkörper (10) ein Wandkörper aus Fertigteilen ist, in welchem der vorab eingebettete Teil (40) bereitgestellt ist.

4. Gebäudewand nach Anspruch 1, wobei die wiederaufladbare Energiespeicherzementbatteriekomponente eine Anodenzementschicht, eine Kathodenzementschicht und eine Diaphragma-Schicht umfasst, welche zwischen der Anodenzementschicht und der Kathodenzementschicht bereitgestellt ist.

5. Gebäudewand nach Anspruch 1, wobei der Wandkörper (10) ein gesintertes Hohlverbundpaneel ist.

6. Gebäudewand nach Anspruch 5, wobei die wiederaufladbare Batteriekomponente (20) eine wiederaufladbare Energiespeicherzementbatteriekomponente vom Plattentyp ist.

7. Gebäudewand nach Anspruch 1, wobei der Wandkörper (10) einen Hauptteil und eine wärmedämmende und schallisolierende Lage umfasst, welche an dem Hauptteil bereitgestellt ist.

## Revendications

1. Mur de bâtiment, comprenant :
un corps mural (10) ;
un composant de batterie rechargeable (20) situé dans le corps mural (10), le composant de batterie rechargeable (20) formant une structure combinée avec le corps mural (10) et étant configuré pour alimenter en énergie des équipements électriques ;
un panneau mural photovoltaïque extérieur (30), le corps mural (10) comprenant une surface murale extérieure (11) sur laquelle est situé le panneau mural photovoltaïque extérieur (30) ;
**caractérisé en ce que** :
une partie pré-encastrée (40) est située dans le corps mural (10), dans lequel le panneau mural photovoltaïque extérieur (30) est connecté électriquement au composant de batterie rechargeable (20) par la partie pré-encastrée (40) ;
dans lequel le composant de batterie rechargeable (20) est un composant de batterie rechargeable à stockage d'énergie à base de ciment, une extrémité de la partie pré-encastrée (40) est connectée au panneau mural photovoltaïque extérieur (30), et l'autre extrémité de la partie pré-encastrée (40) est reliée au composant de batterie rechargeable à stockage d'énergie à base de ciment.

2. Mur de bâtiment selon la revendication 1, dans lequel une surface extérieure du panneau mural photovoltaïque extérieur (30) est munie d'un motif.

3. Mur de bâtiment selon la revendication 1, dans lequel le corps mural (10) est un corps mural préfabriqué en ciment dans lequel est située la partie pré-encastrée (40).

4. Mur de bâtiment selon la revendication 1, dans lequel le composant de batterie rechargeable à stockage d'énergie à base de ciment comprend une couche de ciment anodique, une couche de ciment cathodique et une couche membranaire qui est située entre la couche de ciment anodique et la couche de ciment cathodique.

5. Mur de bâtiment selon la revendication 1, dans lequel le corps mural (10) est un panneau composite creux fritté.

6. Mur de bâtiment selon la revendication 5, dans lequel le composant de batterie rechargeable (20) est un composant de batterie rechargeable à base de ciment de type plaque.

7. Mur de bâtiment selon la revendication 1, dans lequel le corps mural (10) comprend une partie principale et une feuille de conservation thermique et d'isolation sonore située sur la partie principale.
